# FASCICULE DE BREVET EUROPEEN

(11) **EP 2 039 458 B1**
(45) Date de publication et mention de la délivrance du brevet: **16.03.2011**
(21) Numéro de dépôt: 07116948.6
(22) Date de dépôt: 21.09.2007
(51) Int. Cl.: B23K 11/02, B23K 11/06, B23K 11/34, B23K 26/26, B23K 26/24, B23K 26/42, B23K 101/16

(54) **Méthode et dispositif de soudage de tôles bout à bout pour processus de fabrication continue**
Verfahren und Vorrichtung zum Stumpfnahtschweißen von Blechen für einen kontinuierlichen Herstellungsvorgang
Method and device for butt-welding of sheets for a continuous manufacturing process

(43) Date de publication de la demande: 25.03.2009
(73) Titulaire: Malex S.A., 6030 Marchienne-au-Pont (BE)
(72) Inventeur: Quaranta, Alessandro, 6210 Les Bons Villers (BE)
(74) Mandataire: Vandeberg, Marie-Paule L.G.

(56) Documents cités:
- EP-A- 1 157 773
- EP-A- 1 629 927
- EP-A- 1 743 728
- JP-A- 3 060 874
- JP-A- 60 223 686
- JP-A- 2006 205 171
- US-A- 3 909 578

## Description

### Domaine de l'invention

L'invention se rapporte aux méthodes de raboutages de tôles par soudage dans les processus de production continus.

L'invention se rapporte aussi à un dispositif économique permettant la transformation de machines existant sur le marché.

### État de la technique

Pour soutenir les cadences de productions actuelles dans le milieu sidérurgique, les machines de traitement de feuillards travaillent en continu. A cet effet, les extrémités de deux tôles provenant par exemple de bobines différentes sont cisaillées simultanément puis aboutées l'une à l'autre par soudage. Durant le temps (très bref) nécessaire à l'opération, des dispositifs-tampons absorbent l'excédent de tôle produite, de façon à ce que la production progresse sans à-coups.

Le raboutage des tôles sur les lignes en continu peut se faire de diverses façons, à savoir par effet Joule (soudage par résistance), soudage par forgeage-étincelage, ou soudage laser.

Le soudage par résistance, décrit notamment dans EP1484130 est un des procédés actuellement les plus courants, son principe remontant aux années 50. Suivant ce procédé, après avoir été cisaillées, les extrémités des deux tôles sont légèrement superposées, écrasées entre des galets de planage puis soudées par effet Joule, sous l'effet d'un courant intense passant entre deux galets de soudage qui leur sont appliqués de part et d'autre. La ligne de soudure est ensuite calibrée par le passage sur des galets de planage.

L'évolution des nuances d'aciers pose des problèmes dans les soudages par résistance et forgeage-étincelage. En effet, il est possible de souder la plupart des tôles, mais dans certains cas, la qualité de la soudure n'est pas toujours suffisante pour la cadence de défilement de la bande et il subsiste un risque d'arrachage, incident non seulement dangereux mais aussi extrêmement coûteux puisqu'il entraîne nécessairement un arrêt de production.

Le système soudage laser, quant à lui, est industriellement opérationnel depuis environ une dizaine d'années. L'avantage du laser par rapport aux autres procédés de soudage est qu'il autorise pratiquement le soudage de tous les types d'acier.

Cependant, il faut savoir que l'achat d'une machine laser nécessite un investissement lourd (entre 4 et 5 millions d'euros), un long délai de fabrication (de 12 à 15 mois), une nouvelle recherche de paramètres de soudage pour les matières à souder, une formation du personnel et une longue période de rodage du nouvel équipement.

EP 1 157 753 décrit une méthode de soudage laser dans laquelle les tôles sont préchauffées par induction à haute fréquence de façon à provoquer un recuit. Une telle méthode rend évidemment la conception des machines de soudage laser encore plus complexe. Par ailleurs, le chauffage par induction requiert en lui-même une énergie considérable, largement supérieure à l'énergie nécessaire au soudage proprement dit. On notera aussi que l'énergie nécessaire croît fortement avec certains aciers fortement alliés, notamment les aciers au manganèse, en raison de leurs médiocres propriétés magnétiques.

Des tentatives ont déjà été faites, mais dans un tout autre domaine, pour combiner les avantages des méthodes de soudage par laser et par effet Joule. On connaît par EP 1 629 927 une méthode de soudage hybride utilisée dans le domaine de la carrosserie automobile, qui se borne à juxtaposer le passage d'un rayon laser à un soudage classique par effet Joule, de façon à éviter les problèmes résultant notamment de l'état de surface des parties de carrosserie à souder, lesquelles ont, au moment du soudage, déjà subi toute une série d'opérations de mise en forme. On travaille ici à des vitesses et des niveaux d'énergie qui n'ont rien de comparable à celles imposées par les cadences de production dans le domaine de la production de tôles. Enfin, on notera que le soudage laser, complémentaire, a surtout pour but d'étanchéiser les pièces de carrosserie produites.

Le document EP 1 157 773 - considéré comme l'état de la technique la plus proche - décrit un procédé classique de soudage de tôles dans lequel les extrémités des tôles sont écrasées au préalable par des galets de planage avant d'être superposées et soudées par effet Joule.

Le document JP 03 060874 décrit un dispositif dans lequel les extrémités des tôles, superposées, sont écrasées par des galets de planage après chauffage par laser.

EP 1 734 728 décrit un dispositif de soudage de tôles déplaçable perpendiculairement aux tôles à souder, muni de laser de découpe et de soudage et de galets de planage.

### Résumé de l'invention

Un but de l'invention est la mise au point de machines de soudage 100% hybrides, permettant à la fois le soudage par effet Joule ET le soudage laser.

Un autre but de l'invention est la mise au point d'un procédé de soudage permettant le soudage entre elles de qualités de tôles très différentes pour un investissement réduit.

Un autre but de l'invention est la mise au point d'un procédé de soudage permettant une reconversion aisée de machines de soudage par effet Joule.

Un autre but de l'invention est de réduire le chômage technique entraîné par l'arrêt prolongé de machines de soudage.

Un autre but de l'invention est de réduire les pannes.

Un premier objet de l'invention est une méthode hybride d'aboutage de tôles métalliques par soudage dans une machine de soudage comprenant une clame d'entrée, une clame de sortie, des moyens de cisaillement, des galets de préchauffage, qui comprend les opérations suivantes :
- saisie des extrémités de deux tôles à souder respectivement entre une clame d'entrée et une clame de sortie ;
- cisaillement de ces extrémités ;
- rapprochement des clames de façon telle que les extrémités cisaillées des tôles entrent en contact l'une avec l'autre suivant une ligne de jonction ;
- compression de la ligne de jonction entre deux galets conducteurs ;
- passage d'un courant de préchauffe entre les galets conducteurs ;
- déplacement des galets conducteurs sur toute la largeur des tôles à joindre ;
- émission, par une tête laser, d'un rayon de lumière cohérente apte à entraîner la fusion des extrémités aboutées ;
- Positionnement du rayon de lumière cohérente par rapport à la ligne de jonction ;
- déplacement concomitant des galets conducteurs et du rayon de lumière cohérente ;
- soutien de la ligne de jonction entre deux galets de planage.

Un avantage de la méthode de l'invention est que tous les organes utilisés, à l'exception de la tête laser, se retrouvent sur la plupart des machines de soudage par effet Joule actuellement sur le marché, et qu'en conséquence, il est possible, au prix de simples changements de réglages, d'utiliser de telles machines, alternativement, soit comme des machines à soudage purement par effet Joule soit comme des machines pratiquant le soudage hybride de l'invention.

Suivant une première forme de réalisation avantageuse, les galets conducteurs sont placés en avant du point de passage du rayon de lumière cohérente, de façon à assurer un préchauffage des tôles.
Un avantage de cette façon de procéder est que la puissance nécessaire au soudage peut être fortement réduite, permettant l'emploi d'une source laser moins puissante. Suivant une autre forme de réalisation avantageuse, les galets conducteurs sont placés en arrière du point de passage du rayon de lumière cohérente de façon à relâcher les tensions induites lors du soudage. Cette façon de procéder peut être appliquée à des tôles requérant une moindre puissance laser, mais permet un gain en énergie non négligeable puisqu'il n'est plus nécessaire de procéder à un recuit localisé de la soudure
D'une façon optionnelle, les galets de planage compriment la tôle au droit de la soudure de façon à repousser les fibres du métal dans le plan du joint, évitant toute surépaisseur lorsque la tôle, après traitement, doit être réenroulée.

Le rayon de lumière cohérente est, de façon avantageuse, amené de la tête laser à son point d'émission par des fibres optiques. On notera que les systèmes utilisés à l'heure actuelle, comme décrit notamment dans EP 1 157 753, utilisent un renvoi du faisceau de lumière cohérente au travers d'un jeu de tubes et de miroirs, lesquels nécessitent un positionnement précis (et constituent donc une source de panne potentielle) et, surtout, une propreté impeccables. Or, on sait que ces machines sont placées dans des conditions environnantes extrêmement sévères: poussière, fumées et projection d'escarbilles sont leur lot commun. L'encrassement progressif et inévitable des miroirs réduit la puissance disponible et rend donc nécessaire des arrêts réguliers.

La source laser est, de préférence, une source YAG.

On remarquera que les sources YAG sont actuellement limitées en puissance par rapport aux sources CO₂. A l'heure actuelle, les sources YAG les plus puissantes sont d'environ 8 KW. Cette limitation n'est nullement d'un inconvénient dans le cadre de la présente méthode, cette puissance étant largement suffisante du fait précisément que l'on utilise un préchauffage des tôles.

Un autre objet de l'invention est un dispositif de conversion d'une machine de soudage de tôle en continu par effet Joule comprenant une clame d'entrée, une clame de sortie, des moyens de cisaillement des tôles, des galets conducteurs de courant de chauffage, . Ce dispositif comprend:
- une source laser ;
- un réseau de fibre optique amenant un rayon de lumière cohérente émis par la source laser à l'aplomb d'une ligne de jonction des tôles destinées à être soudées ;
- des moyens de gestion électronique et mécaniques permettant le positionnement des tôles de façon telle que leurs extrémités soient aboutées ;
- des moyens de modulation de l'énergie dissipée dans les galets, de façon à maintenir la température des tôles serrées entre ces galets en-deçà de la température de fusion ;
- des moyens de réglage fins permettant de centrer et décentrer le point de rencontre entre le rayon de lumière cohérente et les tôles par rapport à la ligne de jonction de ces tôles ;
- des moyens de fixation de l'extrémité du réseau de fibres optiques conçus de façon à coordonner le déplacement du point d'émission du rayon de lumière cohérente et le déplacement des galets ;

La source laser est de préférence une source YAG, et elle est, de façon avantageuse, fixée sur un chariot sur lequel sont également fixés les galets conducteurs.

De façon préférée, le dispositif comprend en outre des galets de planage et des moyens de réglage des galets de planage permettant de faire varier la pression exercée sur les tôles par ces galets de planage, permettant ainsi de la réduire, le cas échéant, à une pression de simple maintien.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
Les Fig.1 à 8 sont des vues schématiques en élévation, parallèlement au sens de défilement des tôles, des différentes phases d'un soudage par effet Joule
Les Fig.9 à 14 sont des vues schématiques en élévation des différentes phases d'un soudage par le procédé hybride suivant l'invention.

Les figures ne sont pas dessinées à l'échelle.
Généralement, des éléments semblables sont dénotés par des références semblables dans les figures.

### Description détaillée des figures

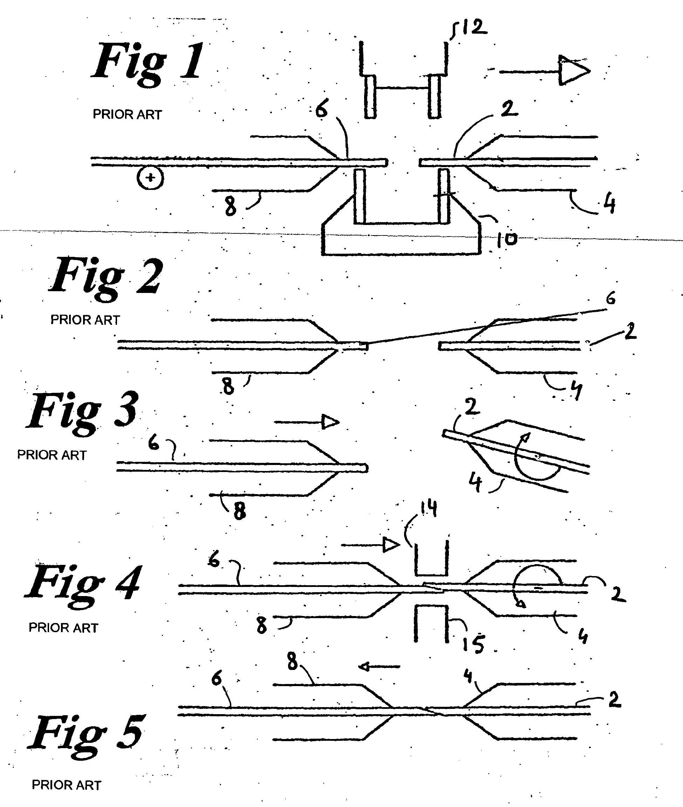

La Fig.1 représente la première étape d'un procédé de soudure classique, qu'il s'agisse d'une soudure par effet Joule ou par laser: l'extrémité d'une tôle sortante 2 est immobilisée par une clame de sortie 4, cependant que l'extrémité de la tôle entrante 6 est immobilisée simultanément par la clame de sortie 8. Les deux extrémités 2 et 6 sont cisaillées par actionnement d'une cisaille inférieure 10 et d'une cisaille supérieure 12.

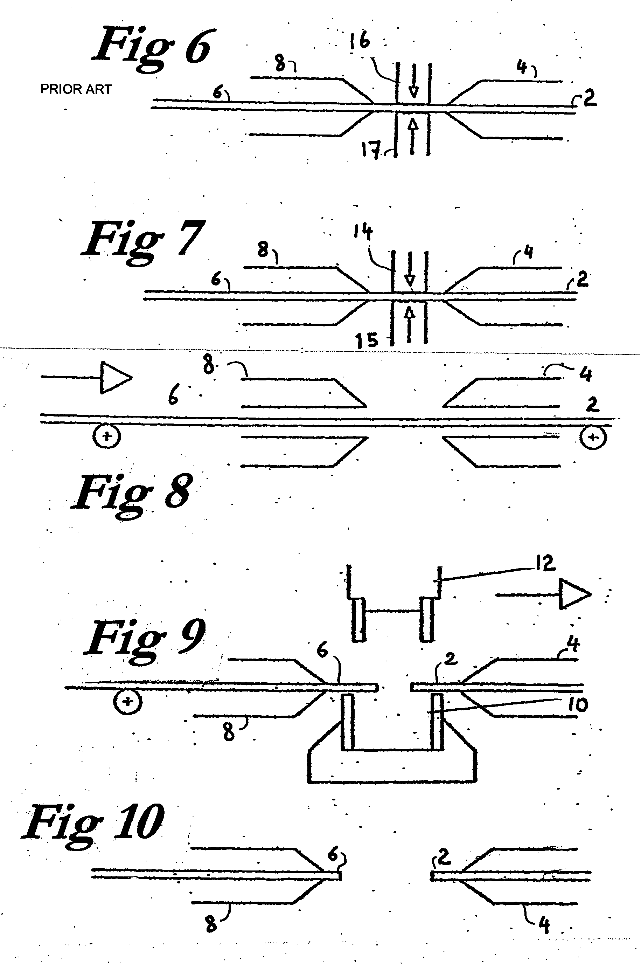

Les tôles présentant désormais un bord franc et net sont rapprochées l'une de l'autre par un mouvement en translation des clames 6, 8 (Fig. 2). La clame de sortie est simultanément actionnée en pivotement (Fig.3), de façon à venir superposer le bord de la tôle 2 par-dessus le bord de la tôle 6. Les tôles 2,6 superposées sont ensuite écrouies par le passage de deux galets de préplanage 14, 15 (Fig.4), à la suite de quoi les bords écrouis sont repositionnés (Fig.5) avant le passage de deux galets conducteurs 16, 17 (Fig.6). Ces galets 16, 17 étant reliés à un transformateur de soudage, un courant intense traverse les tôles au point de contact, et, du fait de leur résistivité, provoque une fusion instantanée. Après passage éventuel de galets de planage (Fig.7), les tôles 2,6, désormais intimement solidarisées, sont libérées des clames et reprennent leur défilement (Fig.8).

Les différentes phases d'un soudage du procédé hybride suivant l'invention sont montrées dans les Fig.9 à 14. Bien que le procédé soit différent, on a repris à dessein la même numérotation pour désigner les organes mis en action, pour bien montrer que la même machine de base peut être utilisée dans les deux procédés.

Le cisaillage préalable des tôles est identique dans les deux procédés. En conséquence, la Fig.8, identique à la Fig.1, n'est reprise que pour mémoire.

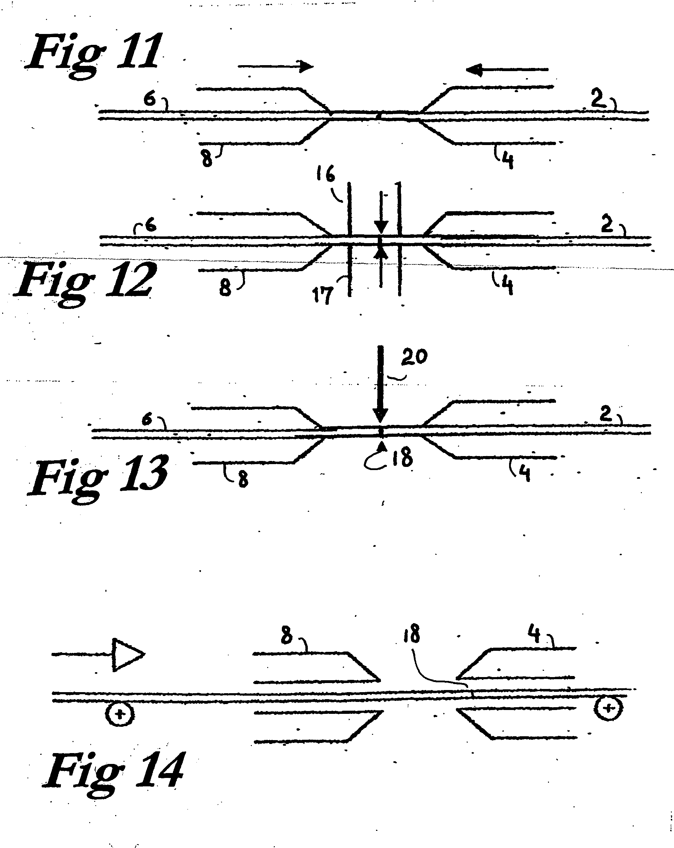

Après cisaillage, les extrémités rectifiées des tôles 2, 6 sont amenées bord contre bord par translation des clames 4, 8 (Fig.9 et 10). La ligne de jonction 18 des tôles est ensuite serrée entre les galets conducteurs 16, 17 (Fig 12). L'énergie mise en jeu est cependant limitée intentionnellement (soit en réduisant l'intensité du courant, soit en accélérant la vitesse de passage des galets) de façon à ce que la température dans les tôles reste en-deçà de la température requise pour la fusion et qu'elles ne subissent qu'un simple préchauffage, suffisant cependant pour en relâcher les tensions.

Aussitôt après le passage des galets, un rayon de lumière cohérente 20 est projeté vers la ligne de jonction 18, (voir Fig. 13) réalisant la fusion des deux tôles 2, 6, après quoi les clames 4, 8 sont ouvertes (Fig.14) et les tôles reprennent leur cheminement, comme dans un procédé classique.

L'apport de calories par les galets de soudage améliore fortement la qualité du soudage laser (préchauffage d'où amélioration des caractéristiques mécaniques avant soudage et diminution de la puissance laser à utiliser).

Il est également possible d'inverser les opérations représentées aux Fig.12 et 13, lorsque l'on a affaire à des tôles ne nécessitant pas une énergie de soudage supérieure à celle qui peut être fournie par la source laser. Dans ce cas, les positions respectives des galets conducteurs et de la source laser sont inversées. Les galets n'assurent plus ici un rôle de préchauffe, mais servent à recuire la tôle au voisinage de la ligne de soudure, de façon à en réduire les tensions induites. Ce recuit, très localisé, permet d'éviter une étape supplémentaire de recuisson, donc un gain de temps et d'énergie pour la production.

La comparaison des figures 1 à 8 et 9 à 14 montre bien que, si l'on excepte le dispositif émetteur de lumière cohérente, une machine de base identique peut être utilisée pour réaliser les deux procédés de soudage.

En conséquence, il est possible, grâce à un « kit » de montage approprié (dont le prix est sans commune mesure avec celui d'une machine neuve), de transformer une soudeuse utilisant l'effet Joule en une machine hybride (soudage par résistance + soudage laser).

Il faut savoir que les machines de soudage sont disposées en tête des lignes de production, et qu'elles jouent donc un rôle capital pour assurer la continuité des produits finis.

Par ailleurs, l'expérience montre qu'en dépit de ses limitations, une machine à soudage par résistance bien entretenue est infiniment moins sujette aux pannes qu'une machine à soudage laser. Avantage énorme sur la technique connue, la machine transformée en machine hybride par l'adjonction du dispositif de l'invention n'occasionnera pratiquement jamais d'arrêt de ligne, car dans le cas d'une défaillance du système laser (hypothèse qui est de loin la plus probable), on peut toujours, au prix d'un simple changement de paramètres, faire fonctionner la machine hybride sur son système de soudage par résistance, toujours opérationnel.

Il faut savoir que dans une fabrication en continu, un arrêt de fabrication résultant notamment de la cassure d'une tôle (typiquement de 24 heures) entraîne des pertes de l'ordre de 500 000 €.

En outre, il est possible d'optimiser la production en fonction de la nature des tôles traitées. La source laser sera ainsi principalement utilisée lors de la production de tôles dont les alliages sont difficilement soudables entre eux. Par contre, le système de soudage par résistance restera d'application pour les autres alliages ne posant pas de problème de compatibilité. Cela signifie que tous les paramètres déjà acquis par le producteur restent parfaitement opérationnels.

## Revendications

1. Méthode d'aboutage de tôles métalliques (2, 6) par soudage dans une machine de soudage comprenant une clame d'entrée (8), une clame de sortie (4), des moyens de cisaillement (10, 12), des galets conducteurs (16, 17), **qui** comprend les opérations suivantes:
- saisie des extrémités de deux tôles à souder (2, 6) ; respectivement entre une clame d'entrée (8) et une clame de sortie (4) ;
- cisaillement de ces extrémités;
**caractérisée en ce qu'elle comprend les opérations suivantes :**
- rapprochement des clames (4, 8) de façon telle que les extrémités cisaillées des tôles (2, 6) entrent en contact l'une avec l'autre suivant une ligne de jonction (18) ;
- compression de la ligne de jonction (18) entre deux galets conducteurs (16, 17) ;
- passage d'un courant électrique entre les galets conducteurs (16, 17) entraînant le chauffage par effet Joule des tôles;
- déplacement des galets conducteurs (16, 17) sur toute la largeur des tôles à joindre (2, 6) ;
- émission, par une tête laser, d'un rayon de lumière cohérente (20) apte à entraîner la fusion des extrémités aboutées ;
- Positionnement du rayon de lumière cohérente (20) par rapport à la ligne de jonction (18) ;
- déplacement concomitant des galets conducteurs (16, 17) et du rayon de lumière cohérente (20) ;
- soutien de la ligne de jonction (18)entre deux galets de planage (14, 15).

2. Méthode selon la revendication 1, **caractérisé en ce que** les galets conducteurs (16, 17) sont placés en avant du point de passage du rayon de lumière cohérente (20) et produisent un préchauffage des tôles.

3. Méthode selon la revendication 1, **caractérisé en ce que** les galets conducteurs (16, 17) sont placés en arrière du point de passage du rayon de lumière cohérente (20) de façon à relâcher les tensions induites lors du soudage.

4. Méthode selon l'une quelconque des revendications précédentes, **caractérisé en ce que** les galets de planage (14, 15) compriment les tôles (2, 6) au droit de la soudure de façon à repousser les fibres du métal dans le plan du joint.

5. Méthode selon l'une quelconque des revendications précédentes, **caractérisé en ce que** le rayon de lumière cohérente (20) est amené de la tête laser à son point d'émission par des fibres optiques.

6. Méthode selon l'une quelconque des revendications précédente **caractérisé en ce que** la source laser est une source YAG.

7. Dispositif de conversion d'une machine de soudage de tôle en continu par effet Joule comprenant une clame d'entrée (8), une clame de sortie (4), des moyens de cisaillement des tôles (10, 12), des galets conducteurs (16, 17) de courant de chauffage, , **caractérisé en ce qu'**il comprend:
- une source laser ;
- un réseau de fibre optique amenant un rayon de lumière cohérente émis par la source laser à l'aplomb d'une ligne de jonction (18) des tôles destinées à être soudées (2, 6) ;
- des moyens de gestion électronique et mécaniques permettant le positionnement des tôles (2, 6) de façon telle que leurs extrémités soient aboutées ;
- des moyens de modulation de la puissance électrique dissipée dans les galets (16, 17) de façon à maintenir la température des tôles serrées entre ces galets en-deçà de la température de fusion ;
- des moyens de réglage fins permettant de centrer le point de rencontre entre le rayon de lumière cohérente (20) et les tôles (2, 6) par rapport à la ligne de jonction (18) de ces tôles (2, 6) ;
- des moyens de fixation de l'extrémité du réseau de fibres optiques conçus de façon à coordonner le déplacement du point d'émission du rayon de lumière cohérente (20) et le déplacement des galets (16, 17);

8. Dispositif de conversion selon la revendication 7, **caractérisé en ce que** la source laser est une source YAG.

9. Dispositif de conversion selon l'une quelconque des revendications 7 ou 8, **caractérisé en ce que** la source laser est fixée sur un chariot sur lequel sont également fixés les galets conducteurs (16, 17).

10. **Dispositif de conversion selon l'une quelconque des revendications 7 ou 8, caractérisé en ce qu'il comprend des galets de planage (14, 15) et des moyens de réglage des galets de planage (14, 15) permettant de faire varier la pression exercée sur les tôles par ces galets de planage (14, 15).**

## Claims

1. Method of butt-welding metal sheets (2, 6) in a welding machine, comprising an input clamp (8), an output clamp (4), shear means (10, 12) and at least one set of conducting rollers (16, 17), comprising the following operations:
- the ends of two sheets (2, 6) to be welded together are gripped, between an input clamp (8) and an output clamp (4) respectively;
- these ends are sheared;
**characterized in that** it comprises the following operations:
- the clamps are brought closer together in such a way that the sheared ends of the sheets are placed facing each other and come into contact with each other via their edges along a join line (18);
- the join line (18) is compressed between at least two conducting rollers (16, 17);
- an electric current is passed between the conducting rollers (16, 17) and the sheets placed facing each other, causing Joule heating in the sheets;
- the conducting rollers (16, 17) are moved over the entire width of the sheets (2, 6) to be joined;
- a coherent light beam (20) capable of melting the facing butted ends is emitted by a laser head;
- the coherent light beam (20) is positioned relative to the join line (18);
- the conducting rollers (16, 17) and the coherent light beam (20) are moved concomitantly; and
- the join line (18) is supported between two planarizing rollers (14, 15).

2. Method according to Claim 1, **characterized in that** at least two conducting rollers (16, 17) are placed in front of the point where the coherent light beam (20) passes and preheat the sheets.

3. Method according to either one of claims 1 or 2, **characterized in that** at least two conducting rollers (16, 17) are placed behind the point where the coherent light beam (20) passes, so as to relieve the tensile stresses induced during welding.

4. Method according to any one of the preceding claims, **characterized in that** the planarizing rollers (14, 15) compress the sheets (2, 6) in line with the weld so as to push back the fibres of the metal in the joint plane.

5. Method according to any one of the preceding claims, **characterized in that** the coherent light beam (20) is conveyed from the laser head to its emission point by optical fibres.

6. Method according to any one of the preceding claims, **characterized in that** the laser source is a YAG source.

7. Device for converting a continuous Joule-effect sheet welding machine comprising an input clamp (8), an output clamp (4), means for shearing the sheets (10, 12), rollers (16, 17) for conducting the heating current, means for positioning the sheets, **characterized in that** it comprises:
- a laser source;
- a fibre-optic system bringing a coherent light beam emitted by the laser source plumb with a join line (18) between the sheets (2, 6) placed facing each other and intended to be welded together;
- electronic and mechanical control means for positioning the sheets (2, 6) in such a way that their facing ends are butted together;
- means for modulating the electrical power dissipated in the rollers (16, 17) so as to keep the temperature of the sheets clamped between these rollers below the melting point;
- fine adjustment means for centring the point where the coherent light beam (20) encounters the sheets (2, 6) relative to the join line (18) of these sheets (2, 6);
- means for fastening the end of the fibre-optic system, designed to coordinate the movement of the point of emission of the coherent light beam (20) and the movement of the rollers (16, 17).

8. Conversion device according to Claim 7, **characterized in that** the laser source is a YAG source.

9. Conversion device according to either of Claims 7 and 8, **characterized in that** the laser source is fastened to a carriage to which the conducting rollers (16, 17) are also fastened.

10. Conversion device according to either of Claims 7 and 8, **characterized in that** it comprises planarizing rollers (14, 15) and means for adjusting planarizing rollers (14, 15), enabling the pressure exerted on the sheets by these planarizing rollers (14, 15) to be varied.

## Patentansprüche

1. Verfahren zum Aneinanderfügen von Metallblechen (2, 6) durch Schweißen in einer Schweißmaschine, umfassend eine Eingangshalteklammer (8), eine Ausgangshalteklammer (4), Abschermittel (10, 12), leitfähige Rollen (16, 17), wobei das Verfahren die folgenden Vorgänge umfasst:
- Ergreifen der Enden von zwei zu verschweißenden Blechen (2, 6); jeweils zwischen einer Eingangshalteklammer (8) und einer Ausgangshalteklammer (4);
- Abscheren dieser Enden;
**dadurch gekennzeichnet, dass** es die folgenden Vorgänge umfasst:
- Zusammenführen der Halteklammern (4, 8), so dass die abgescherten Enden der Bleche (2, 6) sich gegenseitig an einer Verbindungslinie (18) entlang berühren;
- Zusammendrücken der Verbindungslinie (18) zwischen zwei leitfähigen Rollen (16, 17);
- Durchführen eines elektrischen Stroms zwischen den leitfähigen Rollen (16, 17), was zur Erwärmung der Bleche durch Joule-Effekt führt;
- Bewegen der leitfähigen Rollen (16, 17) über die gesamte Breite der zusammenzubringenden Bleche (2, 6);
- Emittieren durch einen Laserkopf eines kohärenten Lichtstrahls (20), der dazu geeignet ist, das Verschmelzen der aneinandergefügten Enden herbeizuführen;
- Positionieren des kohärenten Lichtstrahls (20) im Verhältnis zu der Verbindungslinie (18);
- gleichzeitiges Bewegen der leitfähigen Rollen (16, 17) und des kohärenten Lichtstrahls (20);
- Abstützen der Verbindungslinie (18) zwischen zwei Planierrollen (14, 15).

2. Verfahren nach Anspruch 1, **dadurch gekennzeichnet, dass** die leitfähigen Rollen (16, 17) vor dem Durchgangspunkt des kohärenten Lichtstrahls (20) angeordnet werden und ein Vorwärmen der Bleche erzeugen.

3. Verfahren nach Anspruch 1, **dadurch gekennzeichnet, dass** die leitfähigen Rollen (16, 17) nach dem Durchgangspunkt des kohärenten Lichtstrahls (20) angeordnet werden, um die durch das Verschweißen herbeigeführten Spannungen zu lösen.

4. Verfahren nach einem der vorhergehenden Ansprüche, **dadurch gekennzeichnet, dass** die Planierrollen (14, 15) die Bleche (2, 6) fluchtrecht zu der Schweißnaht zusammendrücken, um die Fasern des Metalls in der Ebene der Naht zu verdrängen.

5. Verfahren nach einem der vorhergehenden Ansprüche, **dadurch gekennzeichnet, dass** der kohärente Lichtstrahl (20) durch Lichtleitfasern von dem Laserkopf zu seinem Emissionspunkt gebracht wird.

6. Verfahren nach einem der vorhergehenden Ansprüche, **dadurch gekennzeichnet, dass** die Laserquelle eine YAG-Quelle ist.

7. Vorrichtung zum Umrüsten einer Maschine zum Dauerschweißen von Blechen durch Joule-Effekt, umfassend eine Eingangshalteklammer (8), eine Ausgangshalteklammer (4), Mittel zum Abscheren der Bleche (10, 12), Heizstrom leitende Rollen (16, 17), **dadurch gekennzeichnet, dass** sie Folgendes umfasst:
- eine Laserquelle;
- ein Lichtleitfasergitter, das einen kohärenten Lichtstrahl zuführt, der von der Laserquelle lotrecht zu einer Verbindungslinie (18) der zu verschweißenden Bleche (2, 6) emittiert wird;
- elektronische und mechanische Handhabungsmittel, welche die Positionierung der Bleche (2, 6) derart ermöglichen, dass ihre Enden aneinander stoßen;
- Mittel zum Modulieren der elektrischen Leistung, die in den Rollen (16, 17) abgeführt wird, um die Temperatur der Bleche, die zwischen diesen Rollen eingespannt sind, unter dem Schmelzpunkt zu halten;
- Feineinstellungsmittel, die es ermöglichen, den Treffpunkt zwischen dem kohärenten Lichtstrahl (20) und den Blechen (2, 6) im Verhältnis zu der Verbindungslinie (18) dieser Bleche (2, 6) zu zentrieren;
- Mittel zum Befestigen des Endes des Lichtleitfasergitters, die dazu ausgelegt sind, die Bewegung des Emissionspunktes des kohärenten Lichtstrahls (20) und die Bewegung der Rollen (16, 17) zu koordinieren.

8. Umrüstungsvorrichtung nach Anspruch 7, **dadurch gekennzeichnet, dass** die Laserquelle eine YAG-Quelle ist.

9. Umrüstungsvorrichtung nach einem der Ansprüche 7 oder 8, **dadurch gekennzeichnet, dass** die Laserquelle an einem Schlitten befestigt ist, auf dem auch die leitfähigen Rollen (16, 17) befestigt sind.

10. Umrüstungsvorrichtung nach einem der Ansprüche 7 oder 8, **dadurch gekennzeichnet, dass** sie Planierrollen (14, 15) und Mittel zum Einstellen der Planierrollen (14, 15) umfasst, die es ermöglichen, den Druck zu variieren, der durch diese Planierrollen (14, 15) auf die Bleche ausgeübt wird.
